# EUROPÄISCHE PATENTSCHRIFT

(11) **EP 0 319 015 B1**
(45) Veröffentlichungstag und Bekanntmachung des Hinweises auf die Patenterteilung: **21.04.1993**
(21) Anmeldenummer: 88120136.2
(22) Anmeldetag: 02.12.1988
(51) Int. Cl.: B65G 47/68, B65G 47/14

(54) **Vorrichtung zum Überführen eines mehrreihigen Stromes aufrechtstehender Gegenstände, insbesondere Flaschen, in eine einzige Reihe**
Device for transferring a multirow flow of upright objects, especially bottles, into a single row
Dispositif pour transformer un flux à plusieurs rangées d'objets en position verticale, notamment de bouteilles, en une seule rangée

(30) Priorität: 04.12.1987 IT 371987
(43) Veröffentlichungstag der Anmeldung: 07.06.1989
(73) Patentinhaber: SIMONAZZI S.p.A., I-43000 Parma (IT)
(72) Erfinder: Limoni, Alfredo, I-43016 Parma (IT)
(74) Vertreter: Lanzoni, Luciano

(56) Entgegenhaltungen:
- DE-C- 872 301
- US-A- 1 430 132
- US-A- 3 049 215

## Beschreibung

Die Erfindung betrifft eine Vorrichtung zum Überführen eines mehrreihigen Stromes aufrechtstehender Gegenstände, insbesondere Flaschen, in eine einzige Reihe nach dem Oberbegriff des Anspruchs 1.

Eine derartige Vorrichtung ist aus der US-PS 14 30 132 bekannt. Auf der gegenüber dem Zuführbereich liegenden Seite des Zwischenförderers ist eine kurze Leitfläche angeordnet, und zwar in einem derartigen Abstand von der äußeren Begrenzungsfläche des Zuförderers, daß zwischen den beiden Leitflächen genau eine Reihe von Gegenständen Platz hat. Die aus der US-PS 14 30 132 vorbekannte Vorrichtung hat folgende Nachteile: Zum einen müssen die zu vereinzelnden Gegenstände teilweise mehrmals den Zwischenförderer umlaufen, bevor sie in einem einreihigen Strom abgefördert werden; die Vorrichtung arbeitet also nicht effektiv. Zum anderen berühren sich die Gegenstände auf dem Abförderer; zwischen den in einer einzigen Reihe angeordneten Gegenständen sind also keine für die spätere Weiterverarbeitung unter Umständen erforderliche Zwischenräume vorhanden.

Die US-PS 30 49 215 und die US-PS 29 41 651 zeigen eine Vorrichtung zum Überführen eines mehrreihigen Stromes von Gegenständen, insbesondere Erz- und Gesteinsbrocken, in eine einzige Reihe. Die Gegenstände werden von einem Zuförderer einem Zwischenförderer zugeführt. Dieser besteht aus einer rotierenden, kegelförmigen Fläche. Eine in Drehrichtung der Fläche spiralförmig nach außen verlaufende, gestellfeste Leitfläche fängt die Gegenstände auf. Diese Leitfläche ist jedoch nur geringfügig spiralförmig ausgestaltet. Die Gegenstände können also mit einer relativ großen radialen Geschwindigkeitskomponente auf die Leitfläche aufprallen. Die aus den genannten US-Patentschriften vorbekannten Vorrichtungen sind also zum Vereinzeln empfindlicher Gegenstände wie insbesondere Flaschen nicht geeignet. Auch andere Gegenstände, bei denen die Gefahr des Umfallens besteht, wie beispielsweise Dosen, können mit den aus den US-Patentschriften 30 49 215 und 29 41 651 vorbekannten Vorrichtungen nicht vereinzelt werden. Die vorbekannten Vorrichtungen eignen sich vielmehr nur zum Überführen derartiger Gegenstände in eine einzige Reihe, bei denen es auf die Lage nicht ankommt, die also umkippen dürfen, wie beispielsweise Erz- und Gesteinsbrocken.

Aus der DE-PS 35 00 660 ist eine Vorrichtung zum Überführen eines mehrreihigen Stromes aufrechtstehender Flaschen in eine einzige Reihe bekannt, bei der der mehrreihige Flaschenstrom auf einem geradlinigen, mit Leitflächen versehenen Zuförderer bewegt wird. An den geradlinigen Bereich des Zuförderers schließt sich ein kreisbogenförmiger Bereich an, der über einen Winkelbereich von 90° verläuft. Im Mittelpunkt des kreisbogenförmigen Abschnitts des Zuförderers befindet sich der Mittelpunkt einer rotierenden Fläche, deren äußere, kreisförmige Begrenzung das Ende des geradlinigen Bereichs des Zuförderers tangential berührt und die an den inneren Teil des kreisbogenförmigen Bereichs des Zuförderers angrenzt. Über den kreisförmigen Bereich des Zuförderers erstreckt sich eine gestellfeste, spiralförmig nach innen verlaufende, äußere Leitfläche. Eine weitere, innere, gestellfeste Leitfläche beginnt am Ende des geradlinigen Bereichs des Zuförderers, verläuft von dort etwa halbkreisförmig zum Mittelpunkt des Zuförderers und setzt sich dann als etwa spiralförmig nach außen verlaufende Leitfläche fort. An der dem kreisförmigen Bereich des Zuförderers gegenüberliegenden Seite des Zwischenförderers ist ein dem Zwischenförderer teilweise umschließender Abförderer angeordnet, der den vom Zwischenförderer erzeugten, einreihigen Flaschenstrom abfördert.

Aufgabe der Erfindung ist es, eine Vorrichtung der eingangs angegebenen Art zu schaffen, die einfach aufgebaut ist und die einen hohen Flaschendurchsatz ermöglicht.

Erfindungsgemäß wird diese Aufgabe durch die kennzeichnenden Merkmale des Anspruchs 1 gelöst. Die im Bereich des Zwischenförderers vorgesehene, gestellfeste Leitfläche verläuft spiralförmig nach außen. Die weitere Leitfläche verläuft im Endbereich des Zuförderers und im Anfangsbereich des Zwischenförderers im wesentlichen in Richtung zur Mitte der Fläche des Zwischenförderers. Dadurch, daß die zwischen dem Zuförderer und dem Zwischenförderer vorgesehene, weitere Leitfläche in einem dem spiralförmigen Bogen entgegengesetzten Bogen in Richtung zur Mitte der Fläche verläuft und anschließend in die Spirale übergeht, können die Gegenstände, insbesondere Flaschen, kontinuierlich und ohne ruckartige Bewegungen der spiralförmigen Leitfläche zugeführt werden. Selbst wenn also Flaschen bearbeitet werden, fallen diese nicht um. Die Flaschen werden zunächst relativ nahe zum Zentrum der kegelförmigen Fläche gebracht. Von dort ausgehend folgen sie durch den Hangabtrieb und durch die Fliehkraft der spiralförmigen Leitfläche nach außen. Mit dieser radial nach außen gerichteten Bewegung gelangen die Flaschen in Bereiche der kegelförmigen Fläche, die eine höhere Geschwindigkeit in tangentialer Richtung aufweisen, so daß die Flaschen hierdurch zunehmend vereinzelt und schließlich in eine einzige Reihe überführt werden. Darüber hinaus sind die in einer einzigen Reihe abgeförderten Flaschen auch noch voneinander beabstandet, was bei der weiteren Verarbeitung von Nutzen bzw. zwingend erforderlich sein kann.

Eine vorteilhafte Weiterbildung der Erfindung besteht daran, daß die Drehachse der rotierenden Fläche des Zwischenförderers gegenüber der Vertikalen geneigt ist. Die Neigung der Drehachse erfolgt vorzugsweise in einer Richtung, die 90° hinter der Zuförderrichtung liegt. Durch die Neigung der Drehachse der rotierenden Fläche des Zwischenförderers kann der Hangabtrieb auf der kegelförmigen Fläche variiert werden. Der Kegelwinkel und der Neigungswinkel der Drehachse werden miteinander kombiniert. Der maximale Neigungswinkel ist die Summe aus Kegelwinkel und Drehachsen-Neigungswinkel. Der minimale Hangabtriebswinkel besteht in der Differenz zwischen dem Kegelwinkel und dem Winkel der Neigung der Kegel-Drehachse; diese Differenz kann im Extremfall gleich Null sein. Vorzugsweise wird die Neigung der Drehachse so eingestellt, daß im Anfangsbereich der Hangabtrieb-Bewegung der Flaschen ein größerer Hangabtrieb-Winkel erreicht wird, da in diesem Bereich noch die Haftreibung wirksam sein kann, die bekanntlich größer ist als die Gleitreibung. Der effektive Neigungswinkel kann durch eine entsprechende Neigung der Drehachse der kegelförmigen Fläche auch in dem Bereich besonders groß gemacht werden, in dem ein besonders intensives Zusammendrängen der Flaschen erfolgt. Die Neigung der Drehachse und die "Stellheit" der Spirale (also der spiralförmigen Leitfläche) müssen aufeinander abgestimmt werden.

Ausführungsbeispiele der Erfindung werden nachfolgend anhand der beigefügten Zeichnungen im einzelnen erläutert. In den Zeichnungen zeigt
- Fig. 1: ein Ausführungsbeispiel der Erfindung in einer Ansicht von oben,
- Fig. 2: ein Ausführungsbeispiel in einer Ansicht von der Seite und
- Fig. 3 - Fig. 7: weitere Ausführungsbeispiele, jeweils in einer Ansicht von oben.

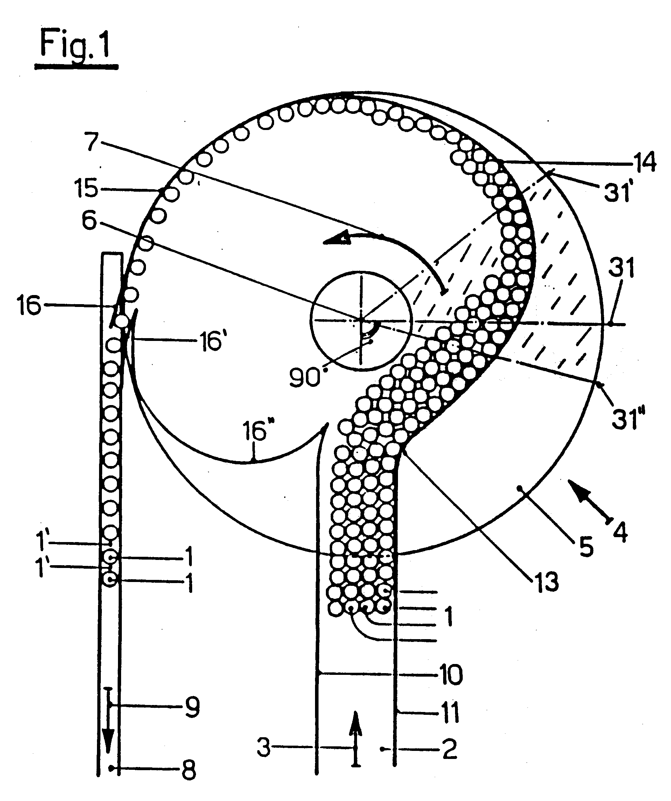

In der in Fig. 1 dargestellten Vorrichtung werden die Flaschen 1 auf dem Zuförderer 2 in Richtung des Pfeiles 3 in vier bis fünf Reihen nebeneinander dem insgesamt mit 4 bezeichneten Zwischenförderer zugeführt. Der Zwischenförderer besteht aus einer um die vertikale Drehachse 6 rotierenden, kegelförmigen Fläche 5. Der Kegel ist dabei nach außen geneigt. An die kegelförmige Fläche 5 schließt sich tangential ein Abförderer 8 an, auf dem die Flaschen 1 in Richtung des Pfeiles 9 transportiert werden. Zwischen den Flaschen 1 auf dem Abförderer 8 liegen Zwischenräume 1'. Die Fläche 5 rotiert in Richtung des Pfeiles 7.

Der geradlinige Zuförderer 2 wird von zwei Leitflächen 10, 11 begrenzt, die parallel zueinander verlaufen. Die Leitfläche 11 erstreckt sich über den äußeren Rand der Fläche 5 hinweg und geht anschließend in einen kreisbogenförmigen Bereich 13 über, der sich über einen Bereich von etwa 45° erstreckt. An den Bereich 13 schließt sich eine spiralförmig nach außen verlaufende, die Gegenstände 1 auffangende, gestellfeste Leitfläche 14 an, die einen Winkel von etwa 225° umfaßt. Die Gegenstände 1 werden sowohl durch den Hangabtrieb als auch durch die Fliehkraft radial nach außen abgedrängt und von der Spirale 14 aufgefangen. Die Flaschen 1 gelangen mit der Spirale in Bereiche von zunehmend größerer Tangentialgeschwindigkeit, wodurch sie in immer weniger Reihen und schließlich in eine einzige Reihe vereinzelt werden. Der in Drehrichtung 7 hinterste Bereich 15 der Leitfläche 14 verläuft im wesentlichen kreisbogenförmig. Die Leitfläche endet in dem Bereich 16, der derartige nach außen geneigt ist, daß eine Überführung der Flaschen auf den Abförderer 8 ermöglicht wird. Auf der dem Bereich 16 gegenüberliegenden Seite befindet sich ein kurzer Bereich 16′, der ebenfalls der Führung der (mittlerweile) einzigen Flaschenreihe dient.

Der Bogen 13 ist dem spiralförmigen Bogen 14 entgegengesetzt gerichtet. Die Leitflächen 10 und 11 verlaufen im Endbereich des Zuförderers 2 und im Anfangsbereich des Zwischenförderers 4 in radialer Richtung auf den Mittelpunkt 6 der Fläche 5 des Zwischenförderers 4 zu.

Die Drehachse 6 der kegelförmigen Fläche 5 kann in vertikaler Richtung verlaufen. Sie kann aber auch gegenüber der Vertikalen geneigt angeordnet sein. Vorzugsweise ist diese Neigung der Drehachse 6 derart, daß sie in der Ebene 31 liegt. Die Ebene 31 ist eine vertikale Ebene, die durch den Mittelpunkt 6 der Fläche 5 verläuft. Der Winkel zwischen der Zuführrichtung 3 des Zuförderers 2 und der Ebene 31 beträgt vorzugsweise etwa 90°. Dieser Winkel kann aber auch geringer sein. Wenn die Drehachse der Fläche 5 in Richtung der Ebene 31 geneigt ist, ist der effektive, auf die Flaschen 1 wirkende Abtriebswinkel in Richtung dieser Ebene 31 am größten und in entgegengesetzter Richtung am kleinsten. Zwischen diesen beiden Richtungen verändert sich der effektive, auf die Flaschen 1 wirkende Winkel kontinuierlich.

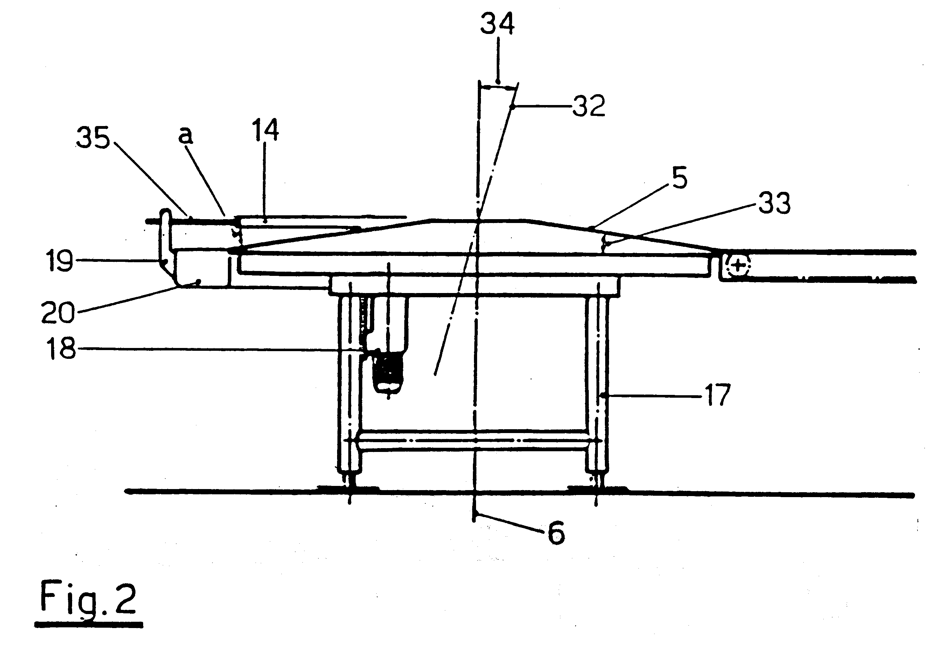

Die Fig. 2 zeigt die Vorrichtung der Fig. 1 in einer Seitenansicht. Gleiche Teile sind dabei mit gleichen Bezugsziffern versehen, so daß sie nicht erneut erläutert werden müssen. Auf dem Gestell 17 befindet sich die kegelförmige Fläche 5, die um die Drehachse 6 rotiert. Die Fläche 5 wird von dem Motor 18 angetrieben. Die spiralförmige Leitfläche 14 verläuft im Abstand a zur kegelförmigen Fläche 5. Im Abstand zur Fläche 5 ist eine vertikale Auffangfläche 19 vorgesehen, die mit dem Gestell 17 verbunden ist. Der Abstand a ist so groß bemessen, daß umgefallene Flaschen unter der spiralförmigen Leitfläche 14 hindurchrollen können. Die Prallbleche 19 verhindern ein Herabfallen der herabrollenden Flaschen. Diese werden in der Rinne 20 gesammelt und können von dort abtransportiert werden.

Die Drehachse der kegelförmigen Fläche 5 kann um den Winkel 34 gegenüber der Vertikalen geneigt sein, wie durch die Bezugsziffer 32 angedeutet. Der Winkel der kegelförmigen Fläche 5 gegenüber der Horizontalen ist mit 33 bezeichnet.

Die spiralförmige Leitfläche 14 ist an Abstandhaltern 35 befestigt, die ihrerseits an den gestellfesten Prallblechen 19 befestigt sind.

Der effektive, auf die Flaschen wirkende Hangabtrieb-Winkel setzt sich zusammen aus der Summe bzw. Differenz des Neigungswinkels 34 und des Kegelwinkels 33.

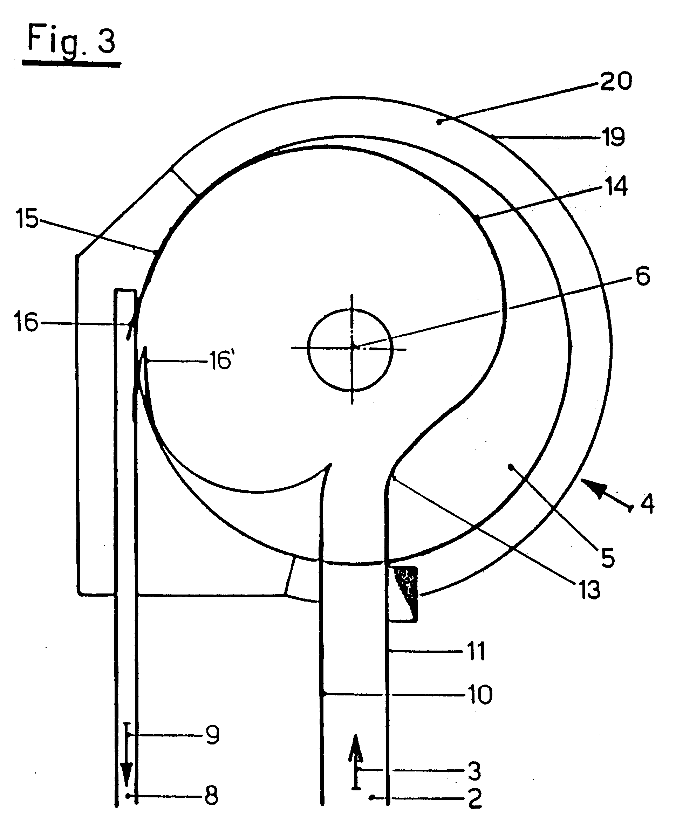

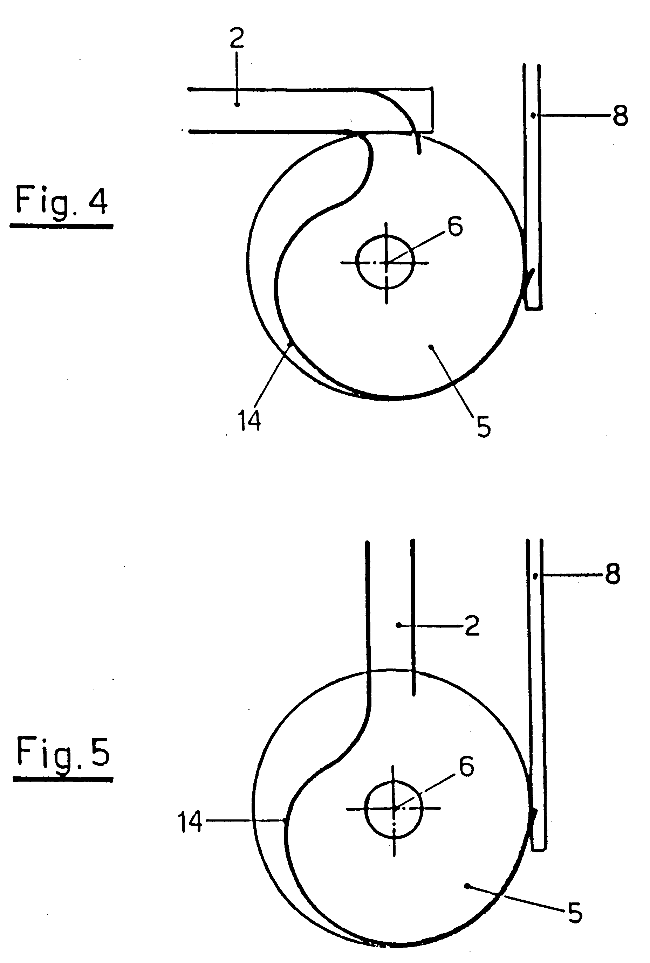

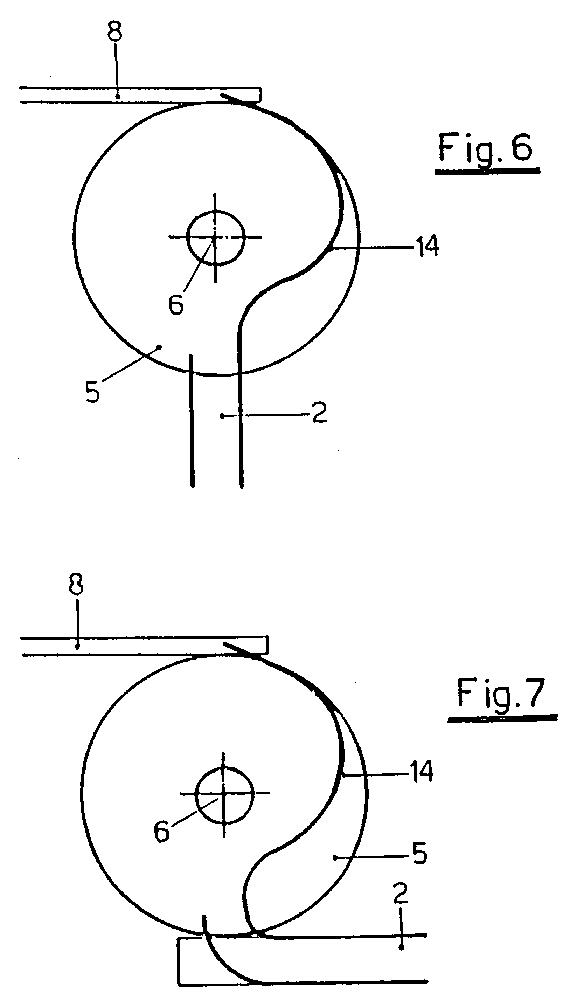

Die Fig. 3 zeigt ein weiteres Ausführungsbeispiel, bei dem die mit den Figuren 1 und 2 übereinstimmenden Teile mit denselben Bezugsziffern versehen sind, so daß auf die Beschreibung zu den Figuren 1 und 2 verwiesen werden kann. Gleiches gilt für die Figuren 4 bis 7.

## Patentansprüche

1. Vorrichtung zum Überführen eines mehrreihigen Stromes aufrechtstehender Gegenstände, insbesondere Flaschen (1), in eine einzige Reihe
mit einem geradlinigen, mit Leitflächen versehenen Zuförderer (2),
einem aus einer rotierenden, kegelförmigen Fläche (5) bestehenden Zwischenförderer (4),
einem Abförderer (8)
und einer in Drehrichtung (7) der Fläche (5), in einem ersten Bogen (14) verlaufenden, die Gegenstände (1) auffangenden, gestellfesten, ersten Leitfläche (14),
wobei zwischen dem Zuförderer (2) und dem Zwischenförderer (4) eine weitere Leitfläche (11) vorgesehen ist, die in einem zweiten, dem ersten Bogen (14) entgegengesetzten Bogen (13) verläuft und anschließend in die erste Leitfläche (14) übergeht,
dadurch gekennzeichnet,
daß die erste Leitfläche (14) im Bereich des Zwischenförderers (4) spiralförmig nach außen verläuft
und daß die weitere Leitfläche (11) im Endbereich des Zuförderers (2) und im Anfangsbereich des Zwischenförderers (4) im wesentlichen in Richtung zur Mitte (6) der Fläche (5) des Zwischenförderers (4) verläuft.

2. Vorrichtung nach Anspruch 1, dadurch gekennzeichnet, daß die Drehachse (6) der rotierenden Fläche (5) des Zwischenförderers (4) gegenüber der Vertikalen geneigt (32, 34) ist.

3. Vorrichtung nach Anspruch 2, dadurch gekennzeichnet, daß die Neigung (34) der Drehachse (32) in einer Richtung (31) erfolgt, die 90° hinter der Zuförderrichtung (3) liegt.

## Claims

1. A device for the transport of a single line of a flow of several lines of objects in vertical position, in particular bottles (1), comprising a horizontal conveyor (2) equipped with guide surfaces, an intermediate conveyor (4) composed of a conically-shaped rotating surface (5), an exit conveyor (8) and a first guide surface (14) which moves in the rotation direction (7) of the surface (5) and describes a first arc (14), a guide surface fixed to a frame which surface intercepts the objects (1), wherein between the conveyor (2) and the intermediate conveyor (4) a further guide surface (11) is envisaged which describes a second arc (14) and which finally terminates in the first guide surface (14), characterised in that the said first guide surface (14) develops externally spirally in the area of the intermediate conveyor (4) and that the further guide surface (11) ends in the final area of the conveyor (2), in the initial area of the intermediate conveyor (4), essentially towards an axis (6) of the surface (5) of the intermediate conveyor (4).

2. A device as in claim 1, characterised in that the rotation axis (6) of the rotating surface (5) of the intermediate conveyor (4) is inclined with respect to a vertical axis (32, 34).

3. A device as in claim 2 characterised in that the inclination (34) of the rotation axis (32) is in a direction (31) positioned at 90 degrees to the transport direction (3).

## Revendications

1. Dispositif pour transformer un flux à plusieurs rangées d'objets en position verticale, notamment de bouteilles (1), en une seule rangée, équipé d'un transporteur horizontal (2) muni de surfaces de guide, d'un transporteur intermédiaire (4) composé d'une surface roulante à forme conique (5), d'un transporteur de sortie (8) et d'une première surface de guide (14) qui se déroule dans le sens de rotation (7) de la surface (5) en un premier arc (14), d'une surface de guide fixée au châssis qui capte les objets (1). Entre le transporteur (2) et le transporteur intermédiaire (4) est prévue une autre surface de guide (11) qui se déroule dans un deuxième arc (13), opposé au premier arc (14) et qui, à la fin, se termine dans la première surface de guide (14). Ledit dispositif est caractérisé en ce fait que:
la première surface de guide (14) se déroule vers l'extérieur à spirale dans l'aire du transporteur intermédiaire (4) et que la dernière surface de guide (11) se déroule dans l'aire finale du transporteur (2), dans l'aire initiale du transporteur intermédiaire (4) essentiellement vers le centre (6) de la surface (5) du transporteur intermédiaire (4).

2. Dispositif comme celui de la revendication 1 caractérisé en ce fait que l'axe de rotation (6) de la surface roulante (5) du transporteur intermédiaire (4) est inclinée par rapport à la verticale (32, 34).

3. Dispositif comme celui de la revendication 2 caractérisé en ce fait que l'inclinaison (34) de l'axe de rotation (32) se fait dans une direction (31) qui se trouve à 90 degrés derrière la direction de transport (3).
